# EUROPÄISCHE PATENTANMELDUNG

(11) **EP 1 094 590 A2**
(43) Veröffentlichungstag der Anmeldung: **25.04.2001**
(21) Anmeldenummer: 00119393.7
(22) Anmeldetag: 12.09.2000
(51) Int. Cl.: H02K 1/30

(54) **Verfahren zum Herstellen eines Rotors einer elektrischen Maschine und entsprechender Rotor**

(30) Priorität: 22.10.1999 DE 19951026
(71) Anmelder: Volkswagen Aktiengesellschaft, 38436 Wolfsburg (DE)
(72) Erfinder: Rennert, Ingo, 38539 Müden/Aller (DE); Revermann, Klaus, 38165 Lehre/Gr. Brunsrode (DE)

(57) **Zusammenfassung**

Zur Herstellung des einen Rotorträger (17) und ein Blechpaket (11) mit mehreren Blechen (12) umfassenden Rotors (10) einer elektrischen Maschine, beispielsweise einer Starter/Generator-Einheit (8) eines Kraftfahrzeugs, wird mindestens ein Blech (12) des Blechpakets (11) derart geformt und aus dem Blechpaket (11) herausgeführt, daß durch dieses mindestens eine Blech (12) zugleich der Rotorträger (17) gebildet wird.

## Beschreibung

Die vorliegende Erfindung betrifft ein Verfahren zum Herstellen eines Rotors einer elektrischen Maschine nach dem Oberbegriff der Ansprüche 1 und 6 sowie einen entsprechenden Rotor.

Elektrische Maschinen werden im Kraftfahrzeugbereich beispielsweise in Form von Starter/Generator-Einheiten eingesetzt, welche einerseits einen schnelleren und leiseren Start des damit gekoppelten Antriebsmotors und andererseits eine hohe Generatorleistung zur Erzeugung von elektrischer Energie für bestimmte Verbraucher des Kraftfahrzeugs ermöglichen.

Der grundsätzliche Aufbau einer derartigen Starter/Generator-Einheit kann beispielsweise den Druckschriften WO 98/05882, DE 196 16 504 A1, DE 196 32 074 A1 oder DE 43 36 162 A1 entnommen werden, wobei als Antriebsmotor ein Verbrennungsmotor verwendet wird, dessen Kurbelwelle mit der als Starter/Generator-Einheit dienenden elektrischen Maschine verbunden ist. Die elektrische Maschine umfaßt einen mit der Kurbelwelle gekoppelten Rotor und einen den Rotor umgebenden Stator, wobei die Wicklungen des Stators über einen Wechselrichter mit der Kraftfahrzeugbatterie verbunden sind. Der Rotor der elektrischen Maschine steht abtriebsseitig über eine Getriebekupplung mit der Getriebeeingangswelle eines Getriebes in Verbindung.

Die als Starter/Generator-Einheit dienende elektrische Maschine wird in zwei unterschiedlichen Betriebsmodi betrieben. In einem Motorbetrieb übernimmt die elektrische Maschine bei Betätigen des Anlasserschlüssels die Funktion eines Anlassers oder Motors zum Starten des Verbrennungsmotors. Hierzu werden den Statorwicklungen entsprechende Erregerströme derart zugeführt, daß der Rotor mit einem Anlaufdrehmoment beaufschlagt wird, welches das Starten des Verbrennungsmotors ermöglicht. Nach dem Starten des Verbrennungsmotors arbeitet die elektrische Maschine im Generatorbetrieb, in dem der Rotor über die Kurbelwelle des Verbrennungsmotors in Rotation versetzt und somit in den Statorwicklungen eine Spannung induziert wird, welche beispielsweise zur Energieversorgung des Bordnetzes bzw. der daran angeschlossenen Verbraucher des Kraftfahrzeuges dient.

Herkömmliche Rotoren bestehen im wesentlichen aus zwei Komponenten, nämlich einem sogenannten Dynamoblechpaket und einem Rotorträger. Der Rotorträger, an dem das Dynamoblechpaket anzubringen ist und der zudem zur Befestigung des Rotors an der Antriebswelle dient, kann beispielsweise aus Stahl, Stahlblech, Aluminium oder Magnesium gefertigt sein. Das gesondert gefertigte Dynamoblechpaket umfaßt mehrere geschichtete Bleche und wird nach seiner Fertigung in einem Aluminiumdruckgußverfahren vergossen und anschließend durch Aufschrumpfen oder Einrollen an dem Rotorträger befestigt.

Bei diesem herkömmlichen Herstellungsverfahren ist somit die getrennte Herstellung des Dynamoblechpakets und des Rotorträgers erforderlich, so daß die Gesamtanzahl der notwendigen Arbeitsschritte und die Herstellungskosten relativ hoch sind.

Der vorliegenden Erfindung liegt daher die Aufgabe zugrunde, ein Verfahren zum Herstellen des Rotors einer elektrischen Maschine sowie einen entsprechenden Rotor vorzuschlagen, wobei die Anzahl der zur Herstellung des Rotors erforderlichen Arbeitsschritte und somit auch die Herstellungskosten reduziert sind.

Diese Aufgabe wird gemäß der vorliegenden Erfindung durch ein Verfahren mit den Merkmalen des Anspruches 1 oder 6 gelöst. Die Unteransprüche definieren bevorzugte und vorteilhafte Ausführungsformen der vorliegenden Erfindung.

Gemäß einem ersten Ausführungsbeispiel der vorliegenden Erfindung werden ein oder mehrere Bleche des Blechpakets so geformt, daß sie zugleich den Rotorträger bilden. Diese Anordnung kann dann in einem Druckgußverfahren, insbesondere einem Aluminium-Druckgußverfahren, vergossen werden. Sind mehrere den Rotorträger bildende Bleche aus dem Blechpaket herausgeführt, können diese zusätzlich an einzelnen Stellen miteinander verschweißt oder vernietet sein.

Gemäß einem zweiten Ausführungsbeispiel der vorliegenden Erfindung wird der Rotorträger während eines Druckgußverfahrens an das Blechpaket angegossen, d.h. das Blechpaket wird während des Druckgußverfahrens derart vergossen, daß als Ergebnis der komplett fertige Rotor erhalten wird.

Erfindungsgemäß werden somit zwei Konstruktionselemente des Rotors in einem Arbeitsschritt zu einem Bauteil integriert. Dadurch kann die Anzahl der für die Herstellung des Rotors erforderlichen Arbeitsschritte und demzufolge auch die Herstellungskosten reduziert werden. Zudem ist eine verbesserte Wärmeabfuhr von einem an dem Blechpaket angebrachten Kurzschlußring über den Rotorträger an die Umgebung bzw. an die Antriebswelle möglich.

Zudem handelt es sich bei der vorliegenden Erfindung unter Berücksichtigung des Gewichts und des Trägheitsmoments des Rotors um eine sehr leichte und schwingungstechnisch günstige Variante. Eine weitere Reduzierung des Gewichts und des Trägheitsmoments kann durch Ausbildung von vorzugsweise speicherartigen Aussparungen in dem Rotorträger erzielt werden. Die Steifigkeit des Rotors kann durch Ausbildung geeigneter Sicken oder Rippen verbessert werden.

Die vorliegende Erfindung eignet sich insbesondere zur Herstellung eines Rotors für eine elektrische Maschine mit schmaler Bauform, welche beispielsweise in einem Kraftfahrzeug an der Kurbelwelle auf der dem Getriebe gegenüberliegenden Seite eines Verbrennungsmotors angeordnet werden kann.

Die Erfindung wird nachfolgend unter Bezugnahme auf die Zeichnung anhand bevorzugter Ausführungsbeispiele beschrieben.
In Fig. 1A-1C sind verschiedene Ausführungsbeispiele für die erfindungsgemäße Herstellung eines Rotors dargestellt.
In Fig. 2 ist schematisch der Aufbau einer Antriebsanordnung für ein Kraftfahrzeug dargestellt, wo ein erfindungsgemäßer Rotor in einer Starter/Generator-Einheit zum Einsatz kommen kann.

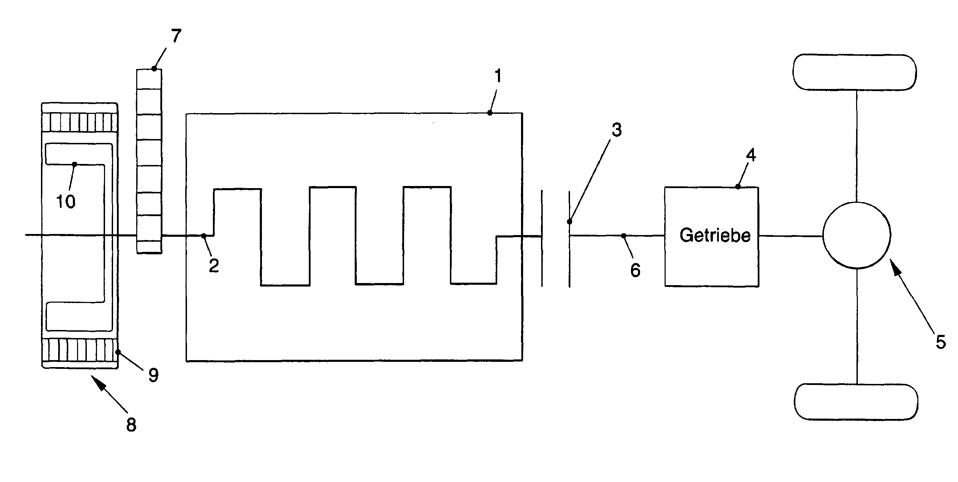

In Fig. 2 ist ein Verbrennungsmotor 1 eines Kraftfahrzeugs dargestellt, über dessen von den Kolben des Verbrennungsmotors 1 angetriebene Kurbelwelle 2 ein Drehmoment über eine Getriebekupplung 3 (bzw. über einen Wandler bei einem Automatikgetriebe) auf die Getriebeeingangswelle 6 eines Schalt- oder Automatikgetriebes 4 zum Antrieb der am Fahrwerk 5 des Kraftfahrzeugs angebrachten Räder übertragen wird.

Auf der dem Getriebe 4 gegenüberliegenden Seite des Verbrennungsmotors 1 ist eine elektrische Maschine 8 angeordnet. Diese elektrische Maschine 8 dient als Starter/Generator-Einheit und ermöglicht einerseits einen einfachen Start des Verbrennungsmotors 1 und andererseits eine hohe Generatorleistung, um nach dem Starten des Verbrennungsmotors 1 Energie für bestimmte Verbraucher des Kraftfahrzeugs bereitzustellen. Zu diesem Zweck umfaßt die elektrische Maschine einen auf die Kurbelwelle 2 aufgesetzten Rotor 10, welcher innerhalb einer oder mehrerer Statorwicklungen 9 drehbar angeordnet ist. Die elektrische Maschine 8 kann sowohl in Form einer Asynchronmaschine als auch in Form einer Synchronmaschine ausgestaltet sein.

Im Motorbetrieb übernimmt die elektrische Maschine 8 bei Betätigen des Anlasserschlüssels die Funktion eines Anlassers zum Starten des Verbrennungsmotors 1. Hierzu wird den Statorwicklungen 9 eine entsprechende Energie von einem (nicht gezeigten) Wechselrichter zugeführt, der eine an ihm anliegende Gleichspannung in einen Drehstrom zum Betreiben der elektrischen Maschine 8 umsetzt, so daß der Rotor 10 mit einem Anlaufdrehmoment beaufschlagt wird, welches das Starten des Verbrennungsmotors 1 ermöglicht. Nach dem Starten des Verbrennungsmotors 1 befindet sich die elektrische Maschine 8 im Generatorbetrieb, wobei der Rotor 10 über die Kurbelwelle 2 des Verbrennungsmotors 1 in Rotation versetzt und somit in den Statorwicklungen 9 eine Spannung induziert wird, welche zur Energieversorgung von verschiedenen Verbrauchern des Kraftfahrzeuges dient. So wird u.a. die von dem Stator 9 gelieferte Spannung bzw. der entsprechende Drehstrom von dem Wechselrichter 13 in eine Versorgungsgleichspannung für das Bordnetz bzw. die daran angeschlossenen Verbraucher des Kraftfahrzeugs und die Fahrzeugbatterie umgewandelt.

Wie beschrieben worden, ist die elektrische Maschine 8 gemäß Fig. 2 auf der dem Getriebe abgewandten Seite der Antriebswelle angeordnet. Der Verbrennungsmotor 1 ist somit zwischen der mit dem einen Ende der Kurbelwelle 2 gekoppelten elektrischen Maschine 8 und dem mit dem anderen Ende der Kurbelwelle 2 gekoppelten Getriebe 4 angeordnet. Durch diese Anordnung kann die elektrische Maschine auf der Kurbelwelle 2 ohne Änderungen am Motor 1, am Getriebe 4 oder an den Montagevorrichtungen und ohne wesentliche axiale Verlängerung der gesamten Anordnung angebracht werden.

Des weiteren ist diese Anordnung äußerst kundendienstfreundlich, da die elektrische Maschine 8 leicht von außen zugänglich ist. Der üblicherweise auf der Seite der Kurbelwelle 2, auf welcher gemäß Fig. 2 die elektrische Maschine 8 angeordnet ist, befindliche Riementrieb zur Betätigung des Klimakompressors, der Lenkhilfepumpe usw. des Kraftfahrzeugs kann entfallen, wenn die mit dem Riemen üblicherweise betätigten Aggregate elektrifiziert werden und beispielsweise im Generatorbetrieb direkt von der elektrischen Maschine 8 mit Energie versorgt werden. Für die nicht elektrifizierten Aggregate (z.B. für den Ventiltrieb sowie für die Öl- und Wasserpumpe des Kraftfahrzeugs) ist hingegen ein Zahnriemen 7 als mechanischer Antrieb vorhanden.

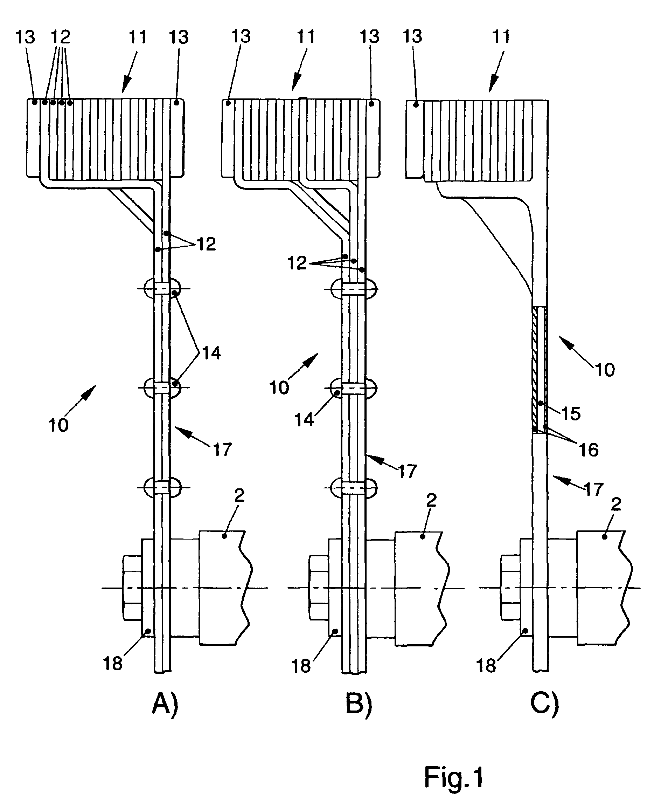

In Fig. 1A ist eine Variante zur Herstellung des Rotors 10 der elektrischen Maschine 8 gemäß einem ersten Ausführungsbeispiel der vorliegenden Erfindung dargestellt.

Wie Fig. 1A entnommen werden kann, umfaßt der Rotor im wesentlichen ein ringförmiges Dynamoblechpaket 11 mit mehreren übereinander geschichteten Blechen 12. Die beiden äußeren Bleche 12 dieses Dynamoblechpakets 11 sind soweit herausgeführt, daß sie im Bereich zwischen dem Dynamoblechpaket 11 und einem Anschraubpunkt 18, bei dem der Rotor 10 mit der Kurbelwelle 2 verschraubt wird, parallel verlaufen und somit zusammen den Rotorträger 17 des Rotors 10 bilden. Während das rechte äußere Blech 12 im wesentlichen eben verläuft, wird das linke äußere Blech 12 derart geformt, daß es an dem Dynamoblechpaket 11 seitlich entlang verläuft und somit zugleich als Auflage für das Dynamoblechpaket 11 dient. Nach der Ausformung der beiden seitlichen Bleche wird das gesamte Dynamoblechpaket 11 bevorzugt in einem Aluminium-Druckgußverfahren vergossen, so daß alle Bleche 12 und der Rotorträger 17 eine Einheit bilden. Zusätzlich können die den Rotorträger bildenden Bleche 12 an einzelnen Stellen 14 verschweißt oder vernietet werden. Ebenso ist anschließend ein partielles Verstemmen dieser Anordnung möglich.

Der Rotor 10 ist bei den dargestellten Ausführungsbeispielen vorzugsweise als sogenannter Kurzschlußläufer ausgebildet. An den beiden äußeren Blechen 12 des Dynamoblechpakets werden daher umlaufende Kurzschlußringe 13 angebracht, über die ein Kurzschlußstrom zur Erzeugung eines entsprechenden elektromagnetischen Feldes fließt.

Die in Fig. 1B gezeigte zweite Variante des ersten Ausführungsbeispiels unterscheidet sich von Fig. 1B lediglich darin, daß der Rotorträger 17 durch drei Bleche des Dynamoblechpakets 11 gebildet ist. Dabei ist ein weiteres Blech 12 aus dem mittleren Bereich des Dynamoblechpakets 11 herausgeführt, und die beiden linken Bleche 12 sind jeweils zunächst an dem Dynamoblechpaket 11 entlang verlaufend ausgeformt und verlaufen anschließend parallel zu dem rechten Blech 12.

Selbstverständlich kann auch eine andere Anzahl von Blechen 12 zur Bildung des Rotorträgers 17 verwendet werden. Im Prinzip reicht es bereits aus, wenn lediglich ein Blech 12 derart ausgeformt wird, daß es zugleich den Rotorträger 17 bildet, und anschließend mit dem Dynamoblechpaket 11 vergossen wird.

In Fig. 1C ist ein zweites Ausführungsbeispiel der vorliegenden Erfindung dargestellt. Dieses zweite Ausführungsbeispiel unterscheidet sich von Fig. 1A und Fig. 1B dadurch, daß das Dynamoblechpaket 11 zunächst auf an sich herkömmliche Art und Weise gefertigt und anschließend in eine Aluminium-Druckgußvorrichtung eingelegt wird. Durch das anschließende Aluminium-Druckgußverfahren wird nicht nur das Dynamoblechpaket 11 vergossen, sondern im gleichen Arbeitsschritt wird auch ein Aluminium-Rotorträger 17 ausgeformt und an das Dynamoblechpaket 11 angegossen, so daß als Ergebnis dieses Druckgußverfahrensschritts der fertige Rotor 10 erhalten wird.

Mit Hilfe der zuvor beschriebenen Herstellungsverfahren für den Rotor 10 kann nicht nur eine Reduzierung der erforderlichen Herstellungsschritte und Herstellungskosten, sondern auch eine Senkung des Trägheitsmoments und des Gewichts des Rotors 10 erzielt werden. Eine weitere Gewichts- und Trägheitsmomentreduzierung kann erzielt werden, wenn in dem Bereich zwischen dem Dynamoblechpaket 11 und dem Anschraubpunkt 18 des scheibenförmigen Rotorträgers 17 wenigstens zwei Aussparungen 15 ausgebildet werden. Diese Aussparungen 15 werden vorzugsweise speichenartig ausgebildet, so daß einerseits eine ausreichende Steifigkeit des Rotorträgers 17 und andererseits ein möglichst geringes Gewicht erzielt werden kann. Die Aussparungen 15 können die gesamte Breite oder Dicke des Rotorträgers 17 durchsetzen. Die in diesem Fall auftretenden akustischen Probleme können gelöst werden, indem die einzelnen Aussparungen mit einem relativ leichten Füllmaterial, beispielsweise Kunststoff, ausgespritzt oder, wie in Fig. 1C gezeigt, beidseitig abgedeckt werden, was beispielsweise durch Einsetzen oder Einclipsen eines Doppel-Verschlußdeckels 16 geschehen kann. Ebenso können die Aussparungen 15 jedoch auch lediglich in Form von vorzugsweise zylinderförmigen Einprägungen ausgestaltet sein, so daß sie nur zu einer Seite des Rotorträgers 17 hin offen sind. In diesem Fall genügt dann die Abdeckung mit einem einzigen Verschlußdeckel 16.

Obwohl diese Art der Gewichts- und Trägheitsmomentreduzierung lediglich in Fig. 1C gezeigt ist, können die zuvor beschriebenen entsprechenden Merkmale selbstverständlich auch auf die in Fig. 1A und 1B gezeigten Varianten übertragen werden.

Abschließend sei darauf hingewiesen, daß die Steifigkeit des Rotors 10 durch Ausbilden von geeigneten Sicken oder Rippen verbessert werden kann.

### BEZUGSZEICHENLISTE

- 1: Verbrennungsmotor
- 2: Kurbelwelle
- 3: Getriebekupplung
- 4: Getriebe
- 5: Fahrwerk
- 6: Getriebeeingangswelle
- 7: Zahnriemen
- 8: Starter/Generator-Einheit
- 9: Stator
- 10: Rotor
- 11: Dynamoblechpaket
- 12: Dynamoblech
- 13: Kurzschlußring
- 14: Nietverbindung
- 15: Aussparung
- 16: Verschlußdeckel
- 17: Rotorträger
- 18: Verschraubung

## Patentansprüche

1. Verfahren zum Herstellen eines Rotors einer elektrischen Maschine, wobei der Rotor (10) einen Rotorträger (17) und ein Blechpaket (11) mit mehreren Blechen (12) umfaßt, **dadurch gekennzeichnet,** daß mindestens ein Blech (12) des Blechpakets (11) derart geformt und aus dem Blechpaket (11) herausgeführt wird, daß durch dieses mindestens ein Blech (12) zugleich der Rotorträger (17) gebildet wird.

2. Verfahren nach Anspruch 1, **dadurch gekennzeichnet,** daß mindestens zwei Bleche (12) aus dem Blechpaket (11) zur Bildung des Rotorträgers (17) herausgeführt werden, wobei die beiden aus dem Blechpaket (11) herausgeführten Bleche (12) das Blechpaket beidseitig begrenzen.

3. Verfahren nach Anspruch 2, **dadurch gekennzeichnet,** daß ein drittes Blech (12) aus dem Blechpaket (11) zur Bildung des Rotorträgers (17) herausgeführt wird, wobei das dritte Blech (12) aus dem mittleren Bereich des Blechpakets (11) herausgeführt wird.

4. Verfahren nach Anspruch 2 oder 3, **dadurch gekennzeichnet,** daß die aus dem Blechpaket (11) herausgeführten Bleche (12) in einem Bereich zwischen dem Blechpaket (11) und einer Befestigungsstelle (18) des Rotors (10) parallel verlaufen.

5. Verfahren nach einem der vorhergehenden Ansprüche, **dadurch gekennzeichnet,** daß das Blechpaket (11) und das mindestens eine aus dem Blechpaket herausgeführte Blech (12) mit Hilfe eines Druckgußverfahrens vergossen werden.

6. Verfahren zum Herstellen eines Rotors einer elektrischen Maschine, wobei der Rotor (10) einen Rotorträger (17) und ein Blechpaket (11) mit mehreren Blechen (12) umfaßt, **dadurch gekennzeichnet,** daß der Rotorträger (17) mit Hilfe eines Druckgußverfahrens während ein und desselben Arbeitsschritts ausgebildet und an das Blechpaket (11) angegossen wird.

7. Verfahren nach einem der vorhergehenden Ansprüche, **dadurch gekennzeichnet,** daß in dem scheibenartigen Rotorträger (17) Aussparungen (15) in dem Bereich zwischen dem Blechpaket (11) und einem Befestigungspunkt (18) des Rotors ausgebildet werden.

8. Verfahren nach Anspruch 7, **dadurch gekennzeichnet,** daß die Aussparungen (15) speichenartig in dem scheibenartigen Rotorträger (17) ausgebildet werden.

9. Verfahren nach Anspruch 7 oder 8, **dadurch gekennzeichnet,** daß die Aussparungen (15) in Form von die gesamte Dicke des Rotorträgers (17) durchdringenden Löchern ausgebildet werden.

10. Verfahren nach Anspruch 9, **dadurch gekennzeichnet,** daß die Aussparungen (15) mit einem Füllmaterial ausgespritzt und/oder beidseitig abgedeckt werden.

11. Verfahren nach Anspruch 8, **dadurch gekennzeichnet,** daß die Aussparungen (15) in den scheibenartigen Rotorträger (17) einseitig eingeprägt und anschließend abgedeckt werden.

12. Verfahren nach einem der vorhergehenden Ansprüche, **dadurch gekennzeichnet,** daß an dem Rotorträger (17) Sicken oder Rippen ausgebildet werden, um die Steifigkeit des Rotorträgers (17) zu verbessern.

13. Verfahren nach einem der vorhergehenden Ansprüche, **dadurch gekennzeichnet,** daß an wenigstens einer Seite des Blechpakets (11) ein Kurzschlußring (13) angebracht wird.

14. Rotor für eine elektrische Maschine, wobei der Rotor (10) einen Rotorträger (17) und ein Blechpaket (11) mit mehreren Blechen (12) umfaßt, **dadurch gekennzeichnet,** daß der Rotor (10) in Übereinstimmung mit einem Verfahren nach einem der Ansprüche 1-13 ausgebildet ist.
